# EUROPÄISCHE PATENTSCHRIFT

(11) **EP 3 215 866 B1**
(45) Veröffentlichungstag und Bekanntmachung des Hinweises auf die Patenterteilung: **08.04.2020**
(21) Anmeldenummer: 15794461.2
(22) Anmeldetag: 27.10.2015
(51) Int. Cl.: G01S 13/931, G01S 7/03, G01S 13/04, H01Q 1/32, G01S 7/02, E05C 17/00, H01Q 25/00

(54) **RADARSENSOR ZUR VERWENDUNG AN EINEM BEWEGLICHEN TEIL EINES KRAFTFAHRZEUGS, KRAFTFAHRZEUG UND VERFAHREN ZUM BETRIEB EINES RADARSENSORS**
RADAR SENSOR FOR THE USE ON A MOVABLE PART OF A VEHICLE, VEHICLE AND METHOD FOR THE OPERATION OF A RADAR SENSOR
CAPTEUR RADAR POUR L'UTILISATION À UNE PARTIE D'UN VÉHICULE, VÉHICULE ET PROCÉDÉ POUR L'OPERATION D'UN CAPTEUR RADAR

(30) Priorität: 08.11.2014 DE 102014016805
(43) Veröffentlichungstag der Anmeldung: 13.09.2017
(73) Patentinhaber: Audi AG, 85045 Ingolstadt (DE)
(72) Erfinder: KHLIFI, Rachid, 85748 Garching (DE)
(74) Vertreter: Thielmann, Frank
(86) Internationale Anmeldenummer: PCT/EP2015/002127
(87) Internationale Veröffentlichungsnummer: WO 2016/070967

(56) Entgegenhaltungen:
- DE-A1-102011 000 514
- DE-A1-102013 010 993
- JP-A- H08 204 621
- JP-A- 2006 319 865
- JP-A- 2007 106 200
- JP-A- 2013 160 607
- US-A1- 2008 238 801
- JIANJUN YU ET AL: "A single-chip x-band chirp radar MMIC with stretch processing", CUSTOM INTEGRATED CIRCUITS CONFERENCE (CICC), 2012 IEEE, IEEE, 9. September 2012 (2012-09-09), Seiten 1-4, XP032251852, DOI: 10.1109/CICC.2012.6330617 ISBN: 978-1-4673-1555-5

## Beschreibung

Die Erfindung betrifft ein Kraftfahrzeug, aufweisend wenigstens eine Tür und einen in wenigstes einer der wenigstens einen Tür verbauten Radarsensor, wobei der Radarsensor eine Leiterplatte mit wenigstens einer Antennenanordnung aufweist. Daneben betrifft die Erfindung ein Verfahren zum Betrieb eines in einer Tür eines Kraftfahrzeugs der zuvor genannten Art verbauten Radarsensors.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Die Verwendung von Halbleitertechnologie, insbesondere CMOS-Technologie, bei Radarsensoren eröffnet neue Einsatzgebiete für diese Radarsensoren, beispielsweise auch die Überwachung von beweglichen Teilen. Insbesondere bezieht sich dies auf die Türen des Kraftfahrzeugs, nachdem es beispielsweise bei Heckklappen bereits bekannt ist, den Bewegungsweg der Heckklappe beim Öffnen zu überprüfen und gegebenenfalls Maßnahmen zu ergreifen, insbesondere eine Warnung an einen Bediener auszugeben und/oder die Heckklappe abzubremsen beziehungsweise anzuhalten. So ist beispielsweise aus DE 10 2011 112 684 A1 ein Kraftfahrzeug mit einer Heckklappe bekannt, der ein berührungsfrei arbeitender Sensor zugeordnet ist, der bei einer Annäherung an ein im Schwenkbereich der Heckklappe vorhandenes Hindernis eine Einrichtung ansteuert, die das Verschwenken der Heckklappe verhindert oder unterbricht. Dieser Sensor kann als ein Radarsensor ausgeführt sein.

Typische Radarsensoren für derartige Anwendungen weisen eine auf eine Leiterplatte gedruckte oder anderweitig aufgebrachte Antennenanordnung auf, die sowohl eine Empfangsantenne als auch eine Sendeantenne umfasst. Dabei werden die Radarsensoren in den Türen häufig so eingebaut, dass sie nach außen gerichtet sind, beispielsweise hinter einem Anteil des Stoßfängers, der für die Radarstrahlung durchlässig ist. Damit ist aber der Überwachungsbereich des Radarsensors auf diese Richtung eingeschränkt. Wird der Radarsensor in der Tür oder allgemein in dem beweglichen Teil des Kraftfahrzeugs verbaut, beispielsweise in einer Heckklappe, bewegt sich der Radarsensor mit dem beweglichen Teil und es wird nur eine Seite des beweglichen Teils überwacht. Bei einem Schließvorgang bleibt die andere Seite unerfasst, was bezüglich dort vorliegender Hindernisse zu Problemen führen kann. Der Einsatz von zusätzlichen Radarsensoren brächte Nachteile bezüglich der Kosten und des Bauraums mit sich.

Aus JP 2006-319865 A ist ein Radarsystem bekannt, welches Detektionsrichtungen wechseln kann. Hierfür werden zwei Antennenelemente auf derselben Oberfläche angeordnet, wodurch zwei nach vorn gerichtete Radarkeulen entstehen, wovon eine eher nach links, und die andere eher nach rechts geneigt ist.

Aus JP 2013-160607 A ein Radarsystem, welches zwei Antennenanordnungen zur Detektion in zwei unterschiedliche Richtungen auf zwei Leiterplatten aufweist, bekannt. Dieses Radarsystem kann in den Außenspiegeln eines Kraftfahrzeugs verbaut werden, um Hindernisse oder andere Fahrzeuge in oder entgegen der Fahrtrichtung zu detektieren.

Des Weiteren ist aus DE 10 2011 000 514 A1 eine automatische Türschwenkvorrichtung bekannt. Hierbei wird mit Hilfe eines Laserstrahls und dessen Reflektion an einem Objekt erkannt, ob sich ein Hindernis innerhalb des Schwenkbereichs der Tür befindet. Wird ein Hindernis erkannt, wird ein Betrieb des Elektromotors zum Schwenken der Tür verhindert.

Aus dem Artikel von Jianjun Yu et al., "A Single Chip X-Band Chirp Radar MMIC with Stretch Processing", Proceedings of the IEEE 2012 Custom Integrated Circuits Conference (2012), ist eine monolithische Implementation eines Radars auf einem einzigen Chip bekannt, wobei die Verwendung des "stretch processing" vorgeschlagen wird.

Zusätzlich ist aus JP 2007 106200 A ein System zur Überwachung einer Fahrzeugumgebung mittels mehrerer Überwachungseinheiten, welche in den Außenspiegeln der Türen untergebracht sind, bekannt, welches zudem erkennt, ob die Tür über die Türgriffe geöffnet wird, um den Türspiegel und somit die Detektionseinheiten zu rotieren.

Des Weiteren ist aus DE 10 2013 010 993 A1 eine Objekterfassungsvorrichtung für ein Fahrzeug zur Überwachung der rückwärtigen Umgebung des Fahrzeugs bekannt. Die Objekterfassungsvorrichtung umfasst einen Radarsensor, welcher drei voneinander separate Radarantennen umfasst. Der Radarsensor ist dabei über eine Signalleitung mit einer Steuereinheit verbunden.

Aus JPH 08204621 A ist eine Karte mit auf der Vorder- und auf der Rückseite angeordneten Mikrostreifenantennen bekannt. Diese ermöglichen eine Kommunikation mit einer Basisstation unabhängig von der Orientierung der Karte.

Zuletzt ist aus US 2008/0238801 A1 ein beidseitiger Antennenreflektor bekannt, wobei auf einer Vorder- und einer Rückseite jeweils eine Antenne angeordnet ist.

Der Erfindung liegt daher die Aufgabe zugrunde, ein Kraftfahrzeug mit wenigstes einem in wenigstens einer der Türen verbauten Radarsensor anzugeben, mit dem eine verbesserte, einfach realisierbare Überwachung von beweglichen Teilen an Kraftfahrzeugen möglich ist, insbesondere bei Türen beim Öffnungs- und auch beim Schließvorgang.

Diese Aufgabe wird bei einem Kraftfahrzeug der eingangs genannten Art erfindungsgemäß durch die weiteren Merkmale des Anspruchs 1 gelöst.

Der Radarsensor des erfindungsgemäßen Kraftfahrzeugs weist mithin auf zwei gegenüberliegenden Seiten der Leiterplatte eine Antennenanordnung auf, insbesondere eine Patchantennen-Anordnung, so dass es je nachdem, welche Antennenanordnung verwendet wird, möglich ist, einen Erfassungsbereich auf der einen oder auf der anderen Seite der Leiterplatte zu wählen. Das Gehäuse des Radarsensors ist dabei zweckmäßig so ausgebildet, dass es auf beiden Seiten, zumindest in dem die Antennenanordnungen überdeckenden Bereich, radardurchlässig ausgestaltet ist. Hierzu kann ein radardurchlässiges Material, beispielsweise Kunststoff, verwendet werden. Eine Steuereinheit kann auswählen, welche der Antennenanordnungen betrieben werden sollen, wobei ein gleichzeitiger, alternierender oder auch zeitweise ein Betrieb nur einer der Antennenanordnungen denkbar ist.

Der Radarsensor wird in einem erfindungsgemäßen Kraftfahrzeug für den Türschutz, insbesondere den Heckklappenschutz und/oder den Seitentürschutz, verwendet. Dabei kann bei geschlossener Tür eine nach außen gerichtete Antennenanordnung des Radarsensors betrieben werden, um den äußeren Raum der Tür zu überwachen; ist die Tür jedoch geöffnet, wird die Bewegung in Schließrichtung stattfinden, so dass die im geschlossenen Zustand der Tür nach innen gerichtete Antennenanordnung eingesetzt wird, um die innere Seite der Tür zu überwachen. Damit erlaubt es die Erfindung mithin, mit einem einzigen Radarsensor mit einer doppelseitigen Antennenanordnung sowohl den inneren als auch den äußeren Bereich zu überwachen. Damit können Vorteile hinsichtlich Bauraum, Kosten und insgesamter Ausgestaltung der Türen erzielt werden.

Ein Radarsensor eines erfindungsgemäßen Kraftfahrzeugs, mit auf beiden Seiten einer Leiterplatte angeordneten Antennenanordnungen, deckt zudem einen sehr großen Abdeckungsbereich ab, da auf jeder Seite der Leiterplatte eine Radarkeule existiert. Wird ein im Bereich von 77 Ghz arbeitender Radarsensor verwendet, sind die Dimensionen der Antennenanordnung sehr klein, so dass eine leichte Integration im Kraftfahrzeug ermöglicht wird.

In besonders zweckmäßiger Ausgestaltung des Kraftfahrzeugs weist der Radarsensor ferner einen als Halbleiterchip, insbesondere als CMOS-Chip, ausgebildeten Radartransceiver auf, der ebenso auf der Leiterplatte angeordnet ist, und/oder die Steuereinheit ist auf der Leiterplatte ausgebildet. Die Nutzung von Halbleitertechnologie, wie sie eingangs beschrieben wurde, insbesondere der CMOS-Technologie, ist auch im Rahmen der vorliegenden Erfindung äußerst nützlich, da dies weiter zur Miniaturisierung und zu einer kompakten Bauweise beiträgt, die es deutlich einfacher ermöglicht, den Radarsensor beispielsweise in Türen zu verbauen. Dabei ist es besonders zweckmäßig, wenn in den Halbleiterchip auch eine digitale Signalverarbeitungseinheit (DSP) und/oder die Steuereinheit integriert sind. Mithin kann ein einziger Halbleiterchip auf der Leiterplatte geschaffen werden, der alle relevanten weiteren Komponenten des Radarsensors neben der Antennenanordnung enthält. Denkbar ist es zudem, dass der Halbleiterchip und eine der Antennenanordnungen als ein Package realisiert sind, was den Platzbedarf weiter reduzieren kann. Selbstverständlich ist es auch denkbar, mehrere Chips unterschiedlicher Funktionen auf der Leiterplatte vorzusehen, welche dann zweckmäßigerweise auf beide Seiten der Leiterplatte verteilt werden können. Der eine Radartransceiver nimmt dabei die Daten beider Antennenanordnungen entgegen, wobei auch eine Ausgestaltung denkbar ist, der dies trotz gleichzeitigem Betrieb der Antennenanordnung möglich ist.

Zweckmäßigerweise können die Antennenanordnungen identisch ausgebildet sein, es ist jedoch auch möglich, ein unterschiedliches Design der Antennenanordnungen zu wählen, wenn beispielsweise die Anforderungen an die jeweiligen Erfassungsbereiche (Radarkeulen) unterschiedlich sind. Beispielsweise können die Antennenanordnungen dann, wenn sie identisch ausgebildet sind, letztlich gespiegelt auf den gegenüberliegenden Seiten der Antennenanordnung vorgesehen sein. Die Verwendung identischer Antennenanordnungen kann dann zweckmäßig sein, wenn die Einbaurichtung irrelevant sein soll, da es dann zu keinen Verwechslungen mehr kommen kann.

Die Steuereinheit kann zum gleichzeitigen und/oder alternierenden Betrieb der Antennenanordnungen und/oder zur Auswahl der zu betreibenden Antennenanordnung und/oder der Betriebsart der Antennenanordnungen in Abhängigkeit von einem aktuellen Zustand des beweglichen Teils beschreibenden Zustandsdaten ausgebildet sein. Es ist also zum einen denkbar, dass, insbesondere fest, bestimmte Betriebsmodi beziehungsweise Betriebsarten vorgesehen sind, in denen die Antennenanordnungen grundsätzlich beide betrieben werden, sei es alternierend oder gleichzeitig. Die bevorzugte Ausgestaltung der vorliegenden Erfindung sieht jedoch vor, die Antennenanordnungen situationsabhängig zu betreiben. Hierfür können Zustandsdaten verwendet werden, die beispielsweise bei Türen den Öffnungsgrad der Türen beschreiben können. Auch eine aktuelle Bewegungsrichtung der Tür kann dann ein interessantes Zustandsdatum sein. Mithin kann insbesondere immer die Antennenanordnung gewählt werden, aus deren Richtung Daten im aktuellen Zustand des beweglichen Teils benötigt werden. Wird eine Tür als bewegliches Teil beispielsweise geöffnet, ist es ausreichend, nur die Daten einer nach außen gerichteten Antennenanordnung aufzunehmen, da diese den zukünftigen Bewegungsweg erfasst. Umgekehrt ist beim Schließvorgang vorzugehen. Befindet sich das bewegliche Teil beispielsweise in einer Zwischenposition, kann der Anteil des Betriebs der Antennenanordnungen anhand des Anteils der verbleibenden Wegstrecken nach beiden Seiten an der gesamt verfügbaren Wegstrecke für das bewegliche Teil bestimmt werden oder dergleichen. So werden in allen Situationen genau da Daten gesammelt, wo sie benötigt werden.

Vorteilhaft ist es, wenn der Öffnungswinkel des Erfassungsbereichs der Antennenanordnungen größer als 120°, insbesondere größer als 150°, ist. Gerade bei der Verwendung an Türen als bewegliche Teile kann es zweckmäßig sein, möglichst vollständig den Bereich erfassen zu können, in dem das bewegliche Teil bewegt wird, weshalb sich große Öffnungswinkel des Erfassungsbereichs anbieten. Beispielsweise kann eine konkrete Anordnung vorsehen, auf beiden Seiten einen Öffnungswinkel von 160° zu verwenden.

Erfindungsgemäß weist das Kraftfahrzeug wenigstens eine Tür und einen in wenigstens einer der wenigstens einen Tür derart verbauten Radarsensor auf, dass im geschlossenen Zustand der Tür eine Antennenanordnung nach innen und eine Antennenanordnung nach außen ausgerichtet ist. Dadurch, dass bei der wenigstens einen mit einem Radarsensor versehenen Tür eine Antennenanordnung nach innen, die andere nach außen gerichtet ist, können sowohl für Öffnungsbewegungen als auch für Schließbewegungen der Tür Hindernisse im Bewegungsweg der Tür erfasst werden, so dass mögliche Kollisionen mit Gegenständen oder beispielsweise auch Teilen eines Insassen, wenn sich die Tür, beispielsweise aufgrund einer Steigung, selbsttätig zu schließen beginnt, erfasst werden können und durch entsprechende Maßnahmen eine Kollision vermieden werden kann. Dabei ist es besonders zweckmäßig, wenn alle Türen, insbesondere also die Heckklappe und alle Seitentüren des Kraftfahrzeugs, mit einem derartigen Radarsensor versehen sind, der deren Bewegungsweg überwachen kann; nur beispielhaft wird sich die folgende Formulierung und Beschreibung immer an einer bestimmten Tür, in die der Radarsensor verbaut ist, orientieren. Ein Verbau in Karosserieteilen der Türen ist aufgrund der platzsparenden Bauweise unter Nutzung nur eines Radarsensors für beide Detektionsrichtungen besonders einfach möglich.

Konkret kann also vorgesehen sein, dass die den Radarsensor aufweisende Tür eine Heckklappe und/oder eine Seitentür ist.

Erfindungsgemäß ist der Radarsensor in einem Karosserieteil derart verbaut, dass eine Antennenanordnung auf der Innenseite der Tür von einem radardurchlässigen Abdeckungsteil, insbesondere aus Kunststoff, überdeckt ist und in einem die Außenseite der Tür bildenden Karosserieabschnitt eine durch ein radardurchlässiges Material, insbesondere Kunststoff, aufgefüllte Aussparung vorgesehen ist, die die andere Antennenanordnung überdeckt. Es wird mithin ausgenutzt, dass an den Innenseiten von Türen ohnehin meist ein radardurchlässiges Abdeckungsteil, insbesondere aus Kunststoff vorliegt, beispielsweise ein Verkleidungselement oder dergleichen, welches durch die Radarstrahlung leicht durchquert werden kann, so dass diesbezüglich keine weiteren Veränderungen aufgrund des Einbaus des Radarsensors mehr nötig sind. Die Außenseite einer Tür wird jedoch häufig durch metallisches Material, beispielsweise Karosserieblech, gebildet, so dass zweckmäßigerweise dann, wenn zum einen die Detektion nach außen ermöglicht werden soll, zum anderen aber ein möglichst vorteilhaftes Erscheinungsbild gewahrt werden soll, ein Loch in dem Karosserieabschnitt vorgesehen sein kann, das entsprechend aufgefüllt ist, so dass sich eine glatte, einheitliche Oberfläche bildet, die dann insbesondere gemeinsam lackiert werden kann. Das bedeutet, es kann vorgesehen sein, dass das Karosserieteil und das Material gemeinsam nach außen von einer Lackschicht überdeckt sind. Weder nach außen noch nach innen ist an der Tür mithin zu erkennen, dass darin ein Radarsensor verbaut ist, der einen Erfassungsbereich sowohl nach innen als auch nach außen aufweist.

In einer bevorzugten Weiterbildung der Erfindung kann vorgesehen sein, dass die Steuereinheit des Radarsensors zum Empfang von einen aktuellen Öffnungszustand der Tür, in der der Radarsensor verbaut ist, beschreibenden Zustandsdaten von einem Steuergerät des Kraftfahrzeugs und/oder einem die Tür, in die der Radarsensor verbaut ist, überwachenden Sensor und zur Auswahl der zu betreibenden Antennenanordnung und/oder der Betriebsart der Antennenanordnungen in Abhängigkeit von den Zustandsdaten ausgebildet ist. Dabei können die Zustandsdaten beispielsweise einen Öffnungsgrad der Tür und/oder eine aktuelle Bewegungsrichtung der Tür enthalten. Somit wird situationsabhängig immer die wenigstens eine Antennenanordnung betrieben, aus deren Richtung Daten benötigt werden. Konkret kann in diesem Zusammenhang vorgesehen sein, dass die Steuereinheit bei einer geschlossenen Tür und/oder bei einem Öffnungsvorgang zur Auswahl der nach außen gerichteten Antennenanordnung und bei einer insbesondere vollständig geöffneten Tür und/oder bei einem Schließvorgang zur Auswahl der nach innen gerichteten Antennenanordnung und/oder in wenigstens einem zwischen einer maximalen Öffnungsposition und einer maximalen Schließposition liegenden Zwischenbereich zu einem wechselnden Betrieb der Antennenanordnungen ausgebildet ist. Ist die Tür mithin geschlossen, fällt eine Kollisionsmöglichkeit mit weiter innenliegenden Objekten genauso weg wie bei einer Tür, die gerade geöffnet wird, so dass zweckmäßig nur die nach außen gerichtete Antennenanordnung betrieben wird. Überschüssige Daten von der anderen Antennenanordnung liegen dann nicht vor. Entsprechend gilt dies für den maximalen Öffnungszustand und die Schließbewegung. Für Zwischenpositionen in dem Zwischenbereich zwischen der maximalen Öffnungsposition und der maximalen Schließposition sind verschiedene Vorgehensweisen denkbar, wenn die Tür gerade nicht bewegt wird. So kann vorgesehen sein, dass dann grundsätzlich ein alternierender Betrieb der Antennenanordnungen vorgenommen wird, um ständig zu überwachen, ob mögliche Kollisionsobjekte vorliegen beziehungsweise sich nähern. Gerade bei einer geöffnet stehenden Tür kann dies zweckmäßig sein, da dann auch bewegte Objekte zu einer Kollision führen können, vor der gewarnt werden kann. Mithin ist ein alternierender Betrieb auch in der maximalen Öffnungsposition bei einer nicht bewegten Tür in bestimmten Situationen sinnvoll möglich. Es ist jedoch auch denkbar, den Anteil an der Datenaufnahme für die jeweiligen Antennenanordnungen nach dem Öffnungsgrad zu bestimmen, so dass beispielsweise bei einer eher geschlossenen Tür häufiger Daten von der nach außen gerichteten Antennenanordnung aufgenommen werden, bei einer eher geöffneten Tür häufiger Daten der nach innen gerichteten Antennenanordnung.

Zweckmäßigerweise kann das Steuergerät zur Auswertung von Sensordaten des Radarsensors und zur Ergreifung wenigstens einer Maßnahme, insbesondere einer Ausgabe einer Warnung und/oder einem Abbremsen und/oder Blockieren der Bewegung der Tür, in der der Radarsensor verbaut ist, bei Ermittlung einer einen Schwellwert überschreitenden Kollisionswahrscheinlichkeit der Tür, in der der Radarsensor verbaut ist, mit einem Objekt ausgebildet sein. Sowohl bei Öffnungs- wie auch bei Schließbewegungen ist es mithin möglich, durch Auswertung der Daten eines einzigen Radarsensors, der zur Erfassung beider Seiten ausgebildet ist, mögliche Hindernisse zu erkennen und entsprechende Maßnahmen zu ergreifen, wie sie im Stand der Technik bereits grundsätzlich bekannt sind. Dabei kann eine Warnung akustisch und/oder optisch und/oder haptisch gegeben werden; bevorzugt ist es jedoch, eine weitere Bewegung der Tür zu blockieren oder zumindest deutlich abzugrenzen. Gerade bei automatisch betriebenen Heckklappen als Türen kann dabei insbesondere auch in den automatischen Betrieb eingegriffen werden, um eine Kollision mit einem detektierten Objekt zu verhindern und dergleichen.

Schließlich betrifft die Erfindung auch ein Verfahren zum Betrieb des in der Tür des erfindungsgemäßen Kraftfahrzeugs verbauten Radarsensors, wobei durch die Steuereinheit einen aktuellen Öffnungszustand der Tür, in der der Radarsensor verbaut ist, beschreibende Zustandsdaten empfangen und zur Auswahl der zu betreibenden Antennenanordnung und/oder der Betriebsart der Antennenanordnungen ausgewertet werden. Sämtliche Ausführungen bezüglich des Radarsensors und des Kraftfahrzeugs lassen sich analog auf das erfindungsgemäße Verfahren übertragen, insbesondere die konkreten Anwendungsfälle bei vollständig geöffneter, vollständig geschlossener und bewegter Tür.

Es sei an dieser Stelle noch angemerkt, dass es auch äußerst zweckmäßig sein kann, den Radarsensor zu einem weiteren Zweck neben dem Schutz der Tür beziehungsweise des beweglichen Teils einzusetzen. So ist es beispielsweise bei einem in einer Heckklappe verbauten Radarsensor denkbar, insbesondere unter Wechsel eines Betriebsmodus im Hinblick auf eine größere Erfassungsreichweite, den Radarsensor auch zur Detektion von Objekten während der Fahrt einzusetzen, beispielsweise, um diese in einem Längsführungssystem, einem Einparksystem und/oder einem Sicherheitssystem einzusetzen. Insbesondere bei Einparksystemen und/oder Sicherheitssystemen können auch Sensordaten von seitlichen Radarsensoren vorteilhaft verwendet werden. Insbesondere ist das Steuergerät des weiteren Fahrzeugsystems dann dazu ausgebildet, Sensordaten des Radarsensors für wenigstens eine seiner Funktionen zu empfangen und auszuwerten; über ein Signal an die Steuereinheit des Radarsensors kann, insbesondere abhängig vom Bewegungszustand des Kraftfahrzeugs und/oder vom Zustand der Zündung, in unterschiedliche Betriebsmodi umgeschaltet werden, wobei einer der Betriebsmodi dann zweckmäßig nur die nach außen gerichtete Antennenanordnung nutzt und der Umfelderfassung im Kraftfahrzeug dient.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Radarsensor,
- Fig. 2: eine Prinzipskizze eines erfindungsgemäßen Kraftfahrzeugs, und
- Fig. 3: den Verbau eines Radarsensors in einer Tür des Kraftfahrzeugs.

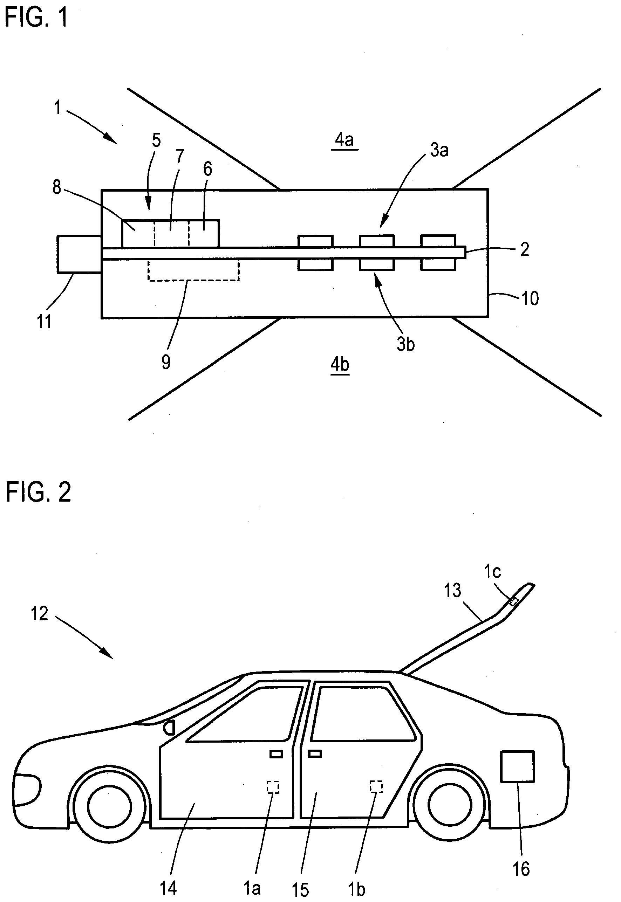

Fig. 1 zeigt eine Querschnittsansicht eines Radarsensors 1. Dieser ist zum Einsatz an wenigstens einer Tür eines erfindungsgemäßen Kraftfahrzeugs vorgesehen, um beide Seiten, insbesondere beide Bewegungsrichtungen, überwachen zu können.

Der Radarsensor 1 umfasst eine Leiterplatte 2 (PCB), auf der sich gegenüberliegend jeweils eine Antennenanordnung 3a, 3b aufgebracht sind, beispielsweise aufgedruckt. Über diese Antennenanordnungen, die vorliegend identisch ausgebildet sind, ist es möglich, einander gegenüberliegende Erfassungsbereiche 4a und 4b (Radarkeulen) bei einem einzigen Radarsensor 1 zu realisieren. Die Erfassungsbereich 4a, 4b weisen dabei jeweils einen Öffnungswinkel von über 120° auf.

Konkret kann er beispielsweise 160° betragen, wobei die Erfassungsbereiche 4a, 4b in Fig. 1 aus Darstellungsgründen mit einem etwas kleineren Winkel gezeichnet sind.

Auf der Leiterplatte 2 liegt zudem noch ein Halbleiterchip 5, hier ein CMOS-Chip, vor, durch den ein Radartransceiver 6, eine digitale Signalverarbeitungskomponente 7 und eine Steuereinheit 8 des Radarsensors realisiert sind. Dies ist in CMOS-Ausgestaltungen problemlos möglich. Beide Komponenten des Radarsensors 1 können, soweit sie nicht durch den Halbleiterchip 5 realisiert sind, durch optionale, hier nur angedeutete weitere Halbleiterchips 9 oder sonstige Komponenten realisiert werden.

Die Leiterplatte 2 ist in einem Gehäuse 10 des Radarsensors 1 gehaltert, welches zumindest in den die Antennenanordnungen 3a, 3b überdeckenden Bereichen radardurchlässig ausgebildet ist, wobei bevorzugt das Radargehäuse 10 insgesamt aus Kunststoff bestehen kann. An dem Gehäuse 10 ist auch eine Anschlusseinrichtung 11 angeordnet, über die Sensordaten ausgegeben werden können und Energie/Steuersignale empfangen werden können.

Insbesondere können über die Anschlusseinrichtung 11 auch Zustandsdaten, die den Zustand des beweglichen Teils beschreiben, bei einer Tür beispielsweise deren Öffnungsgrad und Bewegungsrichtung, empfangen werden, die die Steuereinheit 8 nutzt, um die zu betreibende beziehungsweise die zu betreibenden Antennenanordnungen 3a, 3b auszuwählen beziehungsweise eine Betriebsart zu wählen. An Betriebsarten ist es beispielsweise denkbar, beide Antennenanordnungen 3a, 3b gleichzeitig oder alternierend zu betreiben; bevorzugt ist es jedoch, wenn zumindest in bestimmten Situationen lediglich eine der Antennenanordnungen 3a, 3b verwendet wird, worauf im Folgenden noch näher eingegangen werden wird.

Fig. 2 zeigt eine Prinzipskizze eines erfindungsgemäßen Kraftfahrzeugs 12. Dieses weist fünf Türen auf, von denen in Fig. 2 eine Heckklappe 13 und zwei Seitentüren 14, 15 zu sehen sind. In jeder der Türen des Kraftfahrzeugs 12 sind erfindungsgemäß Radarsensoren 1 verbaut, wobei vorliegend der Radarsensor 1a der Seitentür 14, der Radarsensor 1b der Seitentür 15 und der Radarsensor 1c der Heckklappe 13 angedeutet sind. Ebenso in Fig. 2 angedeutet ist ein Steuergerät 16, das mit den Steuereinheiten 8 der Radarsensoren 1a, 1b, 1c kommunizieren kann und allgemein einer Funktion zum Kollisionsschutz der Türen des Kraftfahrzeugs 12 zugeordnet ist. Es sei an dieser Stelle angemerkt, dass die Radarsensoren 1a, 1b und 1c zumindest teilweise auch von weiteren Fahrzeugsystemen, beispielsweise Einparksystemen, Sicherheitssystemen und dergleichen genutzt werden können, um, gegebenenfalls in einem bestimmten Betriebsmodus, in dem nur die nach außen gerichtete Antennenanordnung 3a, 3b genutzt wird, Umfelddaten über das Umfeld des Kraftfahrzeugs 12 aufzunehmen.

Das Steuergerät 16 wertet die Daten von hier nicht näher gezeigten Sensoren aus, die die Türen, also insbesondere auch die Heckklappe 13 und die Seitentüren 14, 15, überwachen, aus und ermittelt daraus Zustandsdaten, die an die Steuereinheiten 8 der jeweiligen Radarsensoren 1a, 1b, 1c übersendet werden, beispielsweise über ein Bussystem. Es sei der Einfachheit halber im Folgenden davon ausgegangen, dass die Antennenanordnung 3a im geschlossenen Zustand der jeweiligen Tür nach innen gerichtet ist, also in das Innere des Kraftfahrzeugs, und die Antennenanordnung 3b nach außen. Dann steuert die Steuereinheit 8 den Betrieb des Radarsensors 1a, 1b, 1c so, dass immer dann, wenn die Tür sich in einer maximalen Schließposition befindet, nur die nach außen gerichtete Antennenanordnung 3b betrieben wird, was genauso gilt, wenn die entsprechende Tür gerade geöffnet wird, so dass möglicherweise kollidierende Objekte im Bewegungsweg der jeweiligen Tür erkannt werden können. Entsprechend wird dann, wenn die Tür sich in einer maximalen Öffnungsposition befindet beziehungsweise gerade geschlossen wird, nur die Antennenanordnung 3a genutzt, die nach innen gerichtet ist, da diese dann die Objekte im Bewegungsweg der Tür erkennt. In Zwischenpositionen können die Antennenanordnungen 3a, 3b beispielsweise alternierend genutzt werden, insbesondere in einer eher zur maximalen Öffnungsposition gelegenen Zwischenposition in größerem Maße die nach innen gerichtete Antennenanordnung 3a, im umgekehrten Fall hauptsächlich die Antennenanordnung 3b. Selbstverständlich sind auch andere Betriebsprinzipien grundsätzlich denkbar, beispielsweise eine gleichmäßige Nutzung der Antennenanordnung 3a, 3b für alle oder einen großen Teil der Zwischenpositionen und sogar die maximale Öffnungsposition, da so auch bei maximaler Öffnungsposition Objekte detektiert werden können, die von außen mit der jeweiligen Tür zu kollidieren drohen, wenn sie selbst bewegt sind.

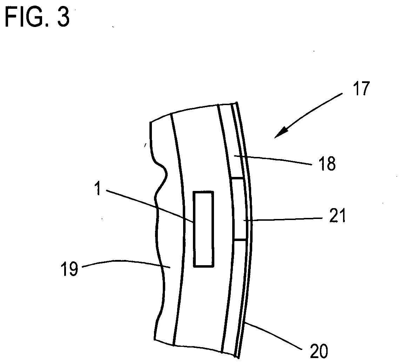

Fig. 3 zeigt schematisch eine Möglichkeit zum Verbau eines Radarsensors 1 in einem Karosserieteil 17 einer Tür, beispielsweise der Heckklappe 13. Ersichtlich ist der Radarsensor 1 im Inneren des Karosserieteils 17 zwischen einem metallenem Karosserieabschnitt 18 und einem Abdeckungsteil 19, beispielsweise einem Verkleidungselement, verbaut. Nachdem das Abdeckungsteil 19 aus Kunststoff besteht, ist es für die Radarstrahlung durchlässig und muss nicht modifiziert werden. Im Karosserieabschnitt 18 wurde eine Aussparung geschaffen, die mit einem für Radarstrahlung durchlässigen Material 19, hier ebenso Kunststoff, aufgefüllt wurde. Auf die entstandene, durchgängig flache Strecke konnte so problemlos eine äußere Lackschicht 20 aufgebracht werden.

## Patentansprüche

1. Kraftfahrzeug (12), aufweisend wenigstens eine Tür und einen in wenigstens einer der wenigstens einen Tür verbauten Radarsensor (1, 1a, 1b, 1c), wobei der Radarsensor (1, 1a, 1b, 1c) eine Leiterplatte (2) mit zwei Antennenanordnungen (3a, 3b) aufweist,
wobei auf der Vorderseite der Leiterplatte (2) und der der Vorderseite gegenüberliegenden Rückseite der Leiterplatte (2) je eine Antennenanordnung (3a, 3b) derart aufgebracht ist, dass sich gegenüberliegende Erfassungsbereiche (4a, 4b) entstehen, und der Radarsensor (1, 1a, 1b, 1c) ferner eine Steuereinheit (8) aufweist, die zur Auswahl einer zu verwendenden Antennenanordnung (3a, 3b) ausgebildet ist, wobei im geschlossenen Zustand der Tür eine Antennenanordnung (3a, 3b) nach innen und eine Antennenanordnung (3b, 3a) nach außen ausgerichtet ist und der Radarsensor (1, 1a, 1b, 1c) in einem Karosserieteil (17) derart verbaut ist, dass eine Antennenanordnung (3a, 3b) auf der Innenseite der Tür von einem radardurchlässigen Abdeckungsteil (19), insbesondere aus Kunststoff, überdeckt ist und in einem die Außenseite der Tür bildenden Karosserieabschnitt (18) eine durch ein radardurchlässiges Material (21), insbesondere Kunststoff, aufgefüllte Aussparung vorgesehen ist, die die andere Antennenanordnung (3b, 3a) überdeckt.

2. Kraftfahrzeug nach Anspruch 1,
**dadurch gekennzeichnet,**
**dass** der Radarsensor ferner einen als Halbleiterchip (5), insbesondere als CMOS-Chip, ausgebildeten Radartransceiver (6) umfasst, der ebenso auf der Leiterplatte (2) angeordnet ist, und/oder dass die Steuereinheit (8) auf der Leiterplatte (2) ausgebildet ist.

3. Kraftfahrzeug nach Anspruch 2,
**dadurch gekennzeichnet,**
**dass** in den Halbleiterchip (5) auch eine digitale Signalverarbeitungseinheit (7) und/oder die Steuereinheit (8) integriert sind.

4. Kraftfahrzeug nach einem der vorangehenden Ansprüche,
**dadurch gekennzeichnet,**
**dass** die Antennenanordnungen (3a, 3b) identisch ausgebildet sind.

5. Kraftfahrzeug nach einem der vorangehenden Ansprüche,
**dadurch gekennzeichnet,**
**dass** die Steuereinheit (8) zum alternierenden Betrieb der Antennenanordnungen (3a, 3b) und/oder zur Auswahl der zu betreibenden Antennenanordnung (3a, 3b) und/oder der Betriebsart der Antennenanordnungen (3a, 3b) jeweils in Abhängigkeit von einen aktuellen Zustand des beweglichen Teils beschreibenden Zustandsdaten ausgebildet ist.

6. Kraftfahrzeug nach einem der vorangehenden Ansprüche,
**dadurch gekennzeichnet,**
**dass** der Öffnungswinkel des Erfassungsbereiches (4a, 4b) der Antennenanordnungen (3a, 3b) größer als 120°, insbesondere größer als 150°, ist.

7. Kraftfahrzeug nach einem der vorangehenden Ansprüche,
**dadurch gekennzeichnet,**
**dass** die den Radarsensor (1, 1a, 1b, 1c) aufweisende Tür eine Heccklappe (13) oder eine Seitentür (14, 15) ist.

8. Kraftfahrzeug nach einem der vorangehenden Ansprüche,
**dadurch gekennzeichnet,**
**dass** das Karosserieteil (17) und das Material (21) gemeinsam nach außen von einer Lackschicht (20) überdeckt sind.

9. Kraftfahrzeug nach einem der vorangehenden Ansprüche,
**dadurch gekennzeichnet,**
**dass** die Steuereinheit (8) des Radarsensors (1, 1a, 1b, 1c) zum Empfang von einen aktuellen Öffnungszustand der Tür, in der der Radarsensor (1, 1a, 1b, 1c) verbaut ist, beschreibenden Zustandsdaten von einem Steuergerät (16) des Kraftfahrzeugs (12) und/oder einem die Tür, in die der Radarsensor (1, 1a, 1b, 1c) verbaut ist, überwachenden Sensor und zur Auswahl der zu betreibenden Antennenanordnung (3a, 3b) und/oder der Betriebsart der Antennenanordnungen (3a, 3b) in Abhängigkeit von den Zustandsdaten ausgebildet ist.

10. Kraftfahrzeug nach Anspruch 9,
**dadurch gekennzeichnet,**
**dass** die Steuereinheit (8) bei einer geschlossenen Tür und/oder bei einem Öffnungsvorgang zur Auswahl der nach außen gerichteten Antennenanordnung (3b, 3a) und bei einer insbesondere vollständig geöffneten Tür und/oder bei einem Schließvorgang zur Auswahl der nach innen gerichteten Antennenanordnung (3a, 3b) und/oder in wenigstens einem zwischen einer maximalen Öffnungsposition und einer maximalen Schließposition liegenden Zwischenbereich zu einem wechselnden Betrieb der Antennenanordnungen (3a, 3b) ausgebildet ist.

11. Kraftfahrzeug nach Anspruch 9 oder 10,
**dadurch gekennzeichnet,**
**dass** das Steuergerät (16) zur Auswertung von Sensordaten des Radarsensors (1, 1a, 1b, 1c) und zur Ergreifung wenigstens einer Maßnahme, insbesondere einer Ausgabe einer Warnung und/oder einem Abbremsen und/oder Blockieren der Bewegung der Tür, in der der Radarsensor (1, 1a, 1b, 1c) verbaut ist, bei Ermittlung einer einen Schwellwert überschreitenden Kollisionswahrscheinlichkeit der Tür, in der der Radarsensor (1, 1a, 1b, 1c) verbaut ist, mit einem Objekt ausgebildet ist.

12. Verfahren zum Betrieb des in der Tür des Kraftfahrzeugs (12) nach einem der vorangehenden Ansprüche verbauten Radarsensors (1, 1a, 1b, 1c), wobei durch die Steuereinheit (8) einen aktuellen Öffnungszustand der Tür, in der der Radarsensor (1, 1a, 1b, 1c) verbaut ist, beschreibende Zustandsdaten empfangen und zur Auswahl der zu betreibenden Antennenanordnung (3a, 3b) und/oder der Betriebsart der Antennenanordnungen (3a, 3b) ausgewertet werden.

## Claims

1. Motor vehicle (12) having at least one door and a radar sensor (1, 1a, 1b, 1c) installed in at least one of the at least one doors, wherein the radar sensor (1, 1a, 1b, 1c) has a circuit board (2) with two antenna arrangements (3a, 3b),
wherein on both the front side of the circuit board (2) and the rear side of the circuit board (2) opposite the front side an antenna arrangement (3a, 3b) is attached, such that opposite detection areas (4a, 4b) are created, and the radar sensor (1, 1a, 1b, 1c) also has a control unit (8) which is designed for selecting an antenna arrangement (3a, 3b) to be used, wherein in the closed state of the door one antenna arrangement (3a, 3b) is oriented inwards and one antenna arrangement (3b, 3a) is oriented outwards, and the radar sensor (1, 1a, 1b, 1c) is installed in a vehicle body part (17) such that an antenna arrangement (3a, 3b) is covered on the inside of the door by a radar-permeable cover part (19), made in particular of plastic, and in a vehicle body part (18) forming the outside of the door a recess filled with a radar-permeable material (21), in particular plastic, is provided which recess covers the other antenna arrangement (3b, 3a).

2. Motor vehicle according to claim 1,
**characterised in that**
the radar sensor also comprises a radar transceiver (6) designed as a semiconductor chip (5), in particular as a CMOS chip, which is also arranged on the circuit board (2) and/or **in that** the control unit (8) is formed on the circuit board (2).

3. Motor vehicle according to claim 2,
**characterised in that**
a digital signal processing unit (7) and/or the control unit (8) are also integrated into the semiconductor chip (5).

4. Motor vehicle according to any of the preceding claims,
**characterised in that**
the antenna arrangements (3a, 3b) are designed to be identical.

5. Motor vehicle according to any of the preceding claims,
**characterised in that**
the control unit (8) is designed for the alternating operation of the antenna arrangements (3a, 3b) and/or for the selection of the antenna arrangement (3a, 3b) to be operated and/or the mode of operation of the antenna arrangements (3a, 3b) respectively as a function of status data describing a current state of the movable part.

6. Motor vehicle according to any of the preceding claims,
**characterised in that**
the opening angle of the detection area (4a, 4b) of the antenna arrangements (3a, 3b) is greater than 120°, in particular greater than 150°.

7. Motor vehicle according to any of the preceding claims,
**characterised in that**
the door having the radar sensor (1, 1a, 1b, 1c) is a tailgate (13) or a side door (14, 15).

8. Motor vehicle according to any of the preceding claims,
**characterised in that**
the vehicle body part (17) and the material (21) are both covered on the outside by a paint layer (20).

9. Motor vehicle according to any of the preceding claims,
**characterised in that**,
the control unit (8) of the radar sensor (1, 1a, 1b, 1c) is designed for receiving status data describing a current opening state of the door, in which the radar sensor (1, 1a, 1b, 1c) is installed, said status data coming from a control device (16) of the motor vehicle (12) and/or a sensor monitoring the door, in which the radar sensor (1, 1a, 1b, 1c) is installed, and is designed for selecting the antenna arrangement (3a, 3b) to be operated and/or the mode of operation of the antenna arrangements (3a, 3b) as a function of the status data.

10. Motor vehicle according to claim 9,
**characterised in that**,
the control unit (8) when a door is closed and/or during an opening process is designed to select the outwardly oriented antenna arrangement (3b, 3a) and when a door is fully open in particular and/or during a closing process is designed to select the inwardly oriented antenna arrangement (3a, 3b) and/or in a least one intermediate area between a maximum opening position and a maximum closing position is designed for the alternating operation of the antenna arrangements (3a, 3b).

11. Motor vehicle according to claim 9 or 10,
**characterised in that**,
the control device (16) is designed for evaluating sensor data of the radar sensor (1, 1a, 1b, 1c) and for undertaking at least one measure, in particular outputting a warning and/or braking and/or blocking the movement of the door, in which the radar sensor (1, 1a, 1b, 1c) is installed, when a probability of the door colliding with an object is determined which exceeds a threshold, in which door the radar sensor (1, 1a, 1b, 1c) is installed.

12. Method for operating the radar sensor (1, 1a, 1b, 1c) installed in the door of the motor vehicle (12) according to any of the preceding claims, wherein by means of the control unit (8) status data describing a current opening state of the door in which the radar sensor (1, 1a, 1b, 1c) is installed are received and are evaluated for selecting the antenna arrangement (3a, 3b) to be operated and/or the mode of operation of the antenna arrangements (3a, 3b).

## Revendications

1. Véhicule automobile (12), comportant au moins une porte et un capteur radar (1, 1a, 1b, 1c) monté dans au moins une de l'au moins une porte,
dans lequel le capteur radar (1, 1a, 1b, 1c) comporte une carte de circuits imprimés (2) avec deux dispositifs d'antenne (3a, 3b),
dans lequel un dispositif d'antenne (3a, 3b) est placé à chaque fois sur la face avant de la carte de circuits imprimés (2) et sur la face arrière, à l'opposé de la face avant, de la carte de circuits imprimés (2) de manière à former des zones de détection (4a, 4b) à l'opposé l'une de l'autre et le capteur radar (1, 1a, 1b, 1c) comporte en outre une unité de commande (8) qui est conçue pour sélectionner un dispositif d'antenne (3a, 3b) à utiliser,
dans lequel, lorsque la porte est fermée, un dispositif d'antenne (3a, 3b) est dirigé vers l'intérieur et un dispositif d'antenne (3b, 3a) est dirigé vers l'extérieur et le capteur radar (1, 1a, 1b, 1c) est monté de telle manière dans une partie de carrosserie (17) qu'un dispositif d'antenne (3a, 3b) est couvert sur le côté intérieur de la porte par une partie couvrante (19), transparente au radar, en particulier en plastique, et, dans une partie de carrosserie (18) formant le côté extérieur de la porte, il est prévu un évidement qui est rempli d'un matériau (21) transparent au radar, en particulier en plastique, et qui recouvre l'autre dispositif d'antenne (3b, 3a).

2. Véhicule automobile selon la revendication 1, **caractérisé en ce que** le capteur radar comprend en outre un émetteur-récepteur radar (6) qui est réalisé sous forme de puce à semi-conducteurs (5), en particulier sous forme de puce CMOS, et qui est également agencé sur la carte de circuits imprimés (2), et/ou **en ce que** l'unité de commande (8) est réalisée sur la carte de circuits imprimés (2).

3. Véhicule automobile selon la revendication 2, **caractérisé en ce qu'**une unité de traitement de signal numérique (7) et/ou l'unité de commande (8) sont aussi intégrées dans la puce à semi-conducteurs (5).

4. Véhicule automobile selon l'une quelconque des revendications précédentes, **caractérisé en ce que** les dispositifs d'antenne (3a, 3b) sont réalisés de manière identique.

5. Véhicule automobile selon l'une quelconque des revendications précédentes, **caractérisé en ce que** l'unité de commande (8) est réalisée pour faire fonctionner de manière alternée les dispositifs d'antenne (3a, 3b) et/ou pour sélectionner le dispositif d'antenne (3a, 3b) à exploiter et/ou le mode de fonctionnement du dispositif d'antenne (3a, 3b), à chaque fois en fonction de données d'état décrivant un état actuel de la partie mobile.

6. Véhicule automobile selon l'une quelconque des revendications précédentes, **caractérisé en ce que** l'angle d'ouverture de la zone de détection (4a, 4b) des dispositifs d'antenne (3a, 3b) est supérieur à 120°, en particulier supérieur à 150°.

7. Véhicule automobile selon l'une quelconque des revendications précédentes, **caractérisé en ce que** la porte comportant le capteur radar (1, 1a, 1b, 1c) est un hayon (13) ou une portière latérale (14, 15).

8. Véhicule automobile selon l'une quelconque des revendications précédentes, **caractérisé en ce que** la partie de carrosserie (17) et le matériau (21) sont recouverts ensemble, vers l'extérieur, d'une couche de vernis (20).

9. Véhicule automobile selon l'une quelconque des revendications précédentes, **caractérisé en ce que** l'unité de commande (8) du capteur radar (1, 1a, 1b, 1c) est réalisée pour recevoir des données d'état, décrivant un état d'ouverture actuel de la porte dans laquelle le capteur radar (1, 1a, 1b, 1c) est monté, en provenance d'un appareil de commande (16) du véhicule automobile (12) et/ou d'un capteur surveillant la porte dans laquelle le capteur radar (1, 1a, 1b, 1c) est monté et pour sélectionner le dispositif d'antenne (3a, 3b) à exploiter et/ou le mode de fonctionnement des dispositifs d'antenne (3a, 3b) en fonction des données d'état.

10. Véhicule automobile selon la revendication 9, **caractérisé en ce que** l'unité de commande (8) est réalisée pour, lorsqu'une porte est fermée et/ou lors d'une opération d'ouverture, sélectionner le dispositif d'antenne (3b , 3a) dirigé vers l'extérieur et, lorsqu'une porte est en particulier complètement ouverte et/ou lors d'une opération de fermeture, sélectionner le dispositif d'antenne (3a, 3b) dirigé vers l'intérieur et/ou, dans au moins une zone intermédiaire située entre une position ouverte maximale et une position fermée maximale, pour faire fonctionner de manière alternée les dispositifs d'antenne (3a, 3b).

11. Véhicule automobile selon la revendication 9 ou 10, **caractérisé en ce que** l'appareil de commande (16) est réalisé pour évaluer des données de capteur du capteur radar (1, 1a, 1b, 1c) et pour prendre au moins une mesure, en particulier une délivrance d'un avertissement et/ou un freinage et/ou blocage du mouvement de la porte dans laquelle le capteur radar (1, 1a, 1b, 1c) est monté, lorsque est déterminée une probabilité de collision, dépassant une valeur de seuil, entre la porte dans laquelle le capteur radar (1, 1a, 1b, 1c) est monté et un objet.

12. Procédé de fonctionnement du capteur radar (1, 1a, 1b, 1c) monté dans la porte du véhicule automobile (12) selon l'une quelconque des revendications précédentes, dans lequel des données d'état décrivant un état d'ouverture actuel de la porte dans laquelle le capteur radar (1, 1a, 1b, 1c) est monté sont reçues par l'unité de commande (8) et sont évaluées pour sélectionner le dispositif d'antenne (3a, 3b) à exploiter et/ou le mode de fonctionnement des dispositifs d'antenne (3a, 3b).
